(19) Europäisches Patentamt / European Patent Office / Office européen des brevets

(11) **EP 4 160 932 A1**

(12) **EUROPEAN PATENT APPLICATION**
published in accordance with Art. 153(4) EPC

(43) Date of publication:
**05.04.2023 Bulletin 2023/14**

(21) Application number: **21833127.0**

(22) Date of filing: **24.03.2021**

(51) International Patent Classification (IPC):
***H04B 7/0456*** (2017.01)

(52) Cooperative Patent Classification (CPC):
**H04B 7/0456; H04W 24/02**

(86) International application number:
**PCT/CN2021/082659**

(87) International publication number:
**WO 2022/001226 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2020 CN 202010610142**

(71) Applicant: **Huawei Technologies Co., Ltd.**
**Shenzhen, Guangdong 518129 (CN)**

(72) Inventors:
• **CHEN, Yan**
**Shenzhen, Guangdong 518129 (CN)**
• **PENG, Bingguang**
**Shenzhen, Guangdong 518129 (CN)**
• **DING, Rentian**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **METHOD FOR TRANSMITTING SOUNDING REFERENCE SIGNAL (SRS) AND COMMUNICATION DEVICE**

(57) Embodiments of this application provide an SRS transmission method and a communication apparatus. The method includes: receiving first configuration information and second configuration information, where the first configuration information is used to indicate an SRS resource used for a CB and/or whether the SRS used for the CB and an SRS used for AS are multiplexed, and the second configuration information is used to indicate a maximum quantity of transport layers and a waveform that is used for communication between a network device and a terminal device. The terminal device separately determines, based on the first configuration information and the second configuration information, whether a condition that the SRS used for the CB and the SRS used for AS are not multiplexed and a condition that an upper limit of an actual quantity of transport layers is less than a quantity of antennas actually used by the terminal device for transmission are met. When the two conditions are met, the terminal device sends the SRS used for the CB to the network device in an SCDD manner. Therefore, a scenario in which the SRS used for the CB is sent in the SCDD manner is extended.

FIG. 3

**Description**

This application claims priority to Chinese Patent Application No. 202010610142.5, filed with the China National Intellectual Property Administration on June 30, 2020 and entitled "SOUNDING REFERENCE SIGNAL SRS TRANSMISSION METHOD AND COMMUNICATION APPARATUS", which is incorporated herein by reference in its entirety.

**TECHNICAL FIELD**

Embodiments of this application relate to the field of electronic technologies, and in particular, to an SRS transmission method and a communication apparatus.

**BACKGROUND**

A sounding reference signal (sounding reference signal, SRS) is a reference signal used to measure an uplink channel. A network device may measure an uplink channel based on an SRS sent by a terminal device, to obtain channel state information (channel state information, CSI) of the uplink channel, so as to schedule an uplink resource. In some cases, the terminal device needs to send an SRS in an antenna switching manner. For example, in some systems characterized by channel reciprocity, the network device may estimate CSI of a downlink channel by using the CSI of the uplink channel obtained by measuring the uplink channel, to schedule a downlink resource. Functions of the SRS usually include: determining a codebook (code book, CB)-based PUSCH transmission mode, determining a non code book (non code book, NCB)-based PUSCH transmission mode, an antenna switching (antenna switching, AS) function, beam management, and the like.

In the conventional technology, transmit power of channels such as a physical uplink shared channel (physical uplink shared channel, PUSCH), a physical random access channel (physical random access channel, PRACH), a physical uplink control channel (physical uplink control channel, PUCCH), and an SRS may be increased in an SCDD manner. Currently, for an SRS used for a CB, when the SRS used for the CB and an SRS used for AS are not multiplexed, and a quantity of antenna ports for the SRS used for the CB is less than an actual quantity of transmit antennas of a terminal device, the SRS used for the CB may be sent in the SCDD manner. However, when the SRS used for the CB and the SRS used for AS are not multiplexed, the quantity of antenna ports is greater than or equal to 2, and the quantity of transmit antennas is equal to the quantity of antenna ports, a communication system cannot uniquely determine whether a single-stream mode or a multi-stream mode is used, and the terminal device cannot determine whether the SRS used for the CB can be sent in the SCDD manner. Consequently, a conventional scenario in which the SRS used for the CB is sent in the SCDD manner is limited.

**SUMMARY**

This application provides an SRS transmission method and a communication apparatus, so as to extend a scenario in which an SRS used for a CB is sent in an SCDD manner, and increase transmit power.

According to a first aspect, an SRS transmission method is provided, including: A terminal device receives first configuration information and second configuration information that are sent by a network device. The first configuration information is used to indicate an SRS resource used for a codebook CB and/or whether the SRS used for the CB and an SRS used for antenna switching AS are multiplexed, and the second configuration information is used to indicate a waveform used for communication between the network device and the terminal device and a maximum quantity of transport layers. The waveform includes a discrete Fourier transform spread orthogonal frequency division multiplexing DFT-s-OFDM waveform and/or a cyclic prefix orthogonal frequency division multiplexing CP-OFDM waveform. The terminal device determines, based on the first configuration information, whether a first preset condition is met. The first preset condition includes: The SRS used for the CB and the SRS used for AS are not multiplexed. The terminal device determines, based on the second configuration information, whether a second preset condition is met. The second preset condition includes: An upper limit of an actual quantity of transport layers is less than a quantity of antennas actually used by the terminal device for transmission, and the upper limit of the actual quantity of transport layers is determined based on the waveform and the maximum quantity of transport layers. When the first preset condition and the second preset condition are met, the terminal device sends the SRS used for the CB to the network device in a small cyclic delay diversity SCDD manner.

That the SRS used for the CB and the SRS used for AS are multiplexed may be understood as that the SRS has a CB function, and the SRS further has an AS function.

The maximum quantity of transport layers may be understood as an upper limit of an actual quantity of transport layers that is determined by a communication system.

The upper limit of the actual quantity of transport layers may be determined based on the waveform used for communication between the network device and the terminal device and the maximum quantity of transport layers.

When the waveform that is used for communication between the network device and the terminal device and that is indicated by the second configuration information is the DFT-s-OFDM waveform, it is implied that the upper limit of the actual quantity of transport layers can only be 1. In this case, the maximum quantity of transport layers indicated in the second configuration information may be greater than 1, but the upper limit of the actual quantity of transport layers is still 1.

When the waveform that is used for communication between the network device and the terminal device and that is indicated by the second configuration information is the CP-OFDM waveform, the upper limit of the actual quantity of transport layers is the maximum quantity of transport layers indicated by the second configuration information.

The SCDD may be understood as sending a same signal through a plurality of antennas simultaneously.

In a possible implementation, when the first configuration information indicates whether the SRS used for the CB and the SRS used for AS are multiplexed, the terminal device may determine, based on the first configuration information, whether the SRS used for the CB and the SRS used for AS are multiplexed.

In another possible implementation, if the first configuration information does not indicate whether the SRS used for the CB and the SRS used for AS are multiplexed, the terminal device may determine the SRS resource based on the first configuration information, and determine, based on the SRS resource, whether the SRS used for the CB and the SRS used for AS are multiplexed.

The terminal device may determine whether a time-frequency resource of the SRS used for the CB and a time-frequency resource of the SRS used for AS are a same time-frequency resource, to determine whether the SRS used for the CB and the SRS used for AS are multiplexed. When the time-frequency resource of the SRS used for the CB overlaps the time-frequency resource of the SRS used for AS, the terminal device determines that the SRS used for the CB and the SRS used for AS are multiplexed. When the time-frequency resource of the SRS used for the CB does not overlap the time-frequency resource of the SRS used for AS, the terminal device determines that the SRS used for the CB and the SRS used for AS are not multiplexed.

In embodiments of this application, the terminal device determines, based on the first configuration information configured by the network device, whether the SRS used for the CB and the SRS used for AS are multiplexed, and determines, based on the second configuration information configured by the network device, the upper limit of the actual quantity of transport layers. Therefore, when determining that the SRS used for the CB and the SRS used for AS are not multiplexed and that the upper limit of the actual quantity of transport layers is less than the quantity of antennas actually used by the terminal device for transmission, the terminal device sends the SRS used for the CB to the network device in the SCDD manner. Therefore, a scenario in which the SRS used for the CB is sent in the SCDD manner is extended, and transmit power is increased.

With reference to the first aspect, in some implementations of the first aspect, the first configuration information is further used to indicate a quantity of antenna ports for the SRS used for the CB. That the terminal device sends the SRS used for the CB to the network device in a small cyclic delay diversity SCDD manner includes: The terminal device determines whether the upper limit of the actual quantity of transport layers is greater than or equal to 2. When the upper limit of the actual quantity of transport layers is greater than or equal to 2, the terminal device sends the SRS used for CB to the network device in the SCDD manner on N antenna ports for the SRS used for the CB through a plurality of antennas. N is equal to the upper limit of the actual quantity of transport layers. Alternatively, when the upper limit of the actual quantity of transport layers is less than 2, the terminal device sends the SRS used for the CB to the network device in the SCDD manner on one antenna port for the SRS used for the CB through a plurality of antennas.

For example, that the terminal device sends the SRS used for CB to the network device in the SCDD manner on the antenna port of the SRS used for the CB through the plurality of antennas may be understood as that the terminal device sends the SRS used for the CB on a single antenna port in the SCDD manner through the plurality of antennas. In this case, the SRS that is used for the CB and that is sent by the terminal device through the plurality of antennas is the same.

In a possible implementation, that the terminal device sends the SRS used for CB to the network device in the SCDD manner on the N antenna ports for the SRS used for the CB through the plurality of antennas may be: The plurality of antennas are grouped into N groups, and the terminal device sends the SRS used for the CB on the single antenna port in the SCDD manner through each antenna in each group of antennas. In this case, the SRS that is used for the CB and that is sent by the terminal device through each antenna in each group of antennas is the same.

In embodiments of this application, the terminal device determines whether the upper limit of the actual quantity of transport layers is greater than or equal to 2. When the upper limit of the actual quantity of transport layers is greater than or equal to 2, the terminal device sends the SRS used for the CB to the network device in the SCDD manner on the N antenna ports for the SRS used for the CB through a plurality of antennas. N is equal to the upper limit of the actual quantity of transport layers. Alternatively, when the upper limit of the actual quantity of transport layers is less than 2, the terminal device sends the SRS used for the CB to the network device in the SCDD manner on the antenna port for the SRS used for the CB through the plurality of antennas. Therefore, a scenario in which the SRS used for the CB is sent in the SCDD manner is extended, and transmit power is increased.

With reference to the first aspect, in some implementations of the first aspect, when the waveform is the DFT-s-OFDM waveform, the upper limit of the actual quantity of transport layers is 1.

With reference to the first aspect, in some implementations of the first aspect, when the waveform is the CP-OFDM waveform, the upper limit of the actual quantity of transport layers is the maximum quantity of transport layers.

With reference to the first aspect, in some implementations of the first aspect, the first configuration information is carried in an SRS configuration message.

With reference to the first aspect, in some implementations of the first aspect, the second configuration information is carried in a physical uplink shared channel PUSCH configuration message.

Optionally, a transform precoder field in the PUSCH configuration message may indicate the waveform.

Optionally, a maxRank field in the PUSCH configuration message may indicate the maximum quantity of transport layers.

With reference to the first aspect, in some implementations of the first aspect, the maximum quantity of transport layers is less than or equal to a minimum value in the quantity of antenna ports for the SRS used for the CB and a quantity of transmit antennas, and the quantity of antenna ports for the SRS used for the CB is less than the quantity of transmit antennas.

According to a second aspect, an SRS transmission method is provided, including: A network device configures first configuration information and second configuration information. The first configuration information is used to indicate an SRS resource used for a codebook CB and/or whether the SRS used for the CB and an SRS used for antenna switching AS are multiplexed, and the second configuration information is used to indicate a waveform used for communication between the network device and a terminal device and a maximum quantity of transport layers. The waveform includes a discrete Fourier transform spread orthogonal frequency division multiplexing DFT-s-OFDM waveform and/or a cyclic prefix orthogonal frequency division multiplexing CP-OFDM waveform. The network device sends the first configuration information and the second configuration information to the terminal device. The first configuration information is used by the terminal device to determine whether a first preset condition is met. The first preset condition includes: The SRS used for the CB and the SRS used for AS are not multiplexed. The second configuration information is used by the terminal device to determine whether a second preset condition is met. The second preset condition includes: An upper limit of an actual quantity of transport layers is less than a quantity of antennas actually used by the terminal device for transmission, and the upper limit of the actual quantity of transport layers is determined based on the waveform and the maximum quantity of transport layers. The network device receives the SRS that is used for the CB and that is sent by the terminal device in a small cyclic delay diversity SCDD manner. The SRS that is used for the CB and that is sent by the terminal device in the SCDD manner is sent when the terminal device determines that the first preset condition and the second preset condition are met.

Optionally, the network device may determine the first configuration information and the second configuration information by using an antenna switch capability message reported by the terminal device.

The antenna switch capability may be understood as a quantity of receive antennas and a quantity of transmit antennas in antennas of the terminal device.

Optionally, the network device may determine whether a time-frequency resource of the SRS used for the CB and a time-frequency resource of the SRS used for AS are a same time-frequency resource, to determine whether the SRS used for the CB and the SRS used for AS are multiplexed. After the network device determines whether the SRS used for the CB and the SRS used for AS are multiplexed, the network device may indicate, by using the first configuration information, whether the SRS used for the CB and the SRS used for AS are multiplexed.

When the time-frequency resource of the SRS used for the CB overlaps the time-frequency resource of the SRS used for AS, the network device determines that the SRS used for the CB and the SRS used for AS are multiplexed. When the time-frequency resource of the SRS used for the CB does not overlap the time-frequency resource of the SRS used for AS, the network device determines that the SRS used for the CB and the SRS used for AS are not multiplexed.

Optionally, the network device may further reconfigure a target parameter, and send the reconfigured target parameter to the terminal device, so that the terminal device determines, based on the reconfigured target parameter, whether a preset condition is met. The target parameter includes at least one of the following: the SRS resource in the first configuration information, a quantity of ports in the first configuration information, whether the SRS used for the CB and the SRS used for AS are multiplexed in the first configuration information, or the second configuration information.

In some possible implementations, the network device may periodically reconfigure the target parameter

In some other possible implementations, the network device may reconfigure the target parameter based on another parameter For example, the another parameter includes at least one of the following: a signal strength of the terminal device or power consumption of the terminal device.

In some other possible implementations, the network device may receive an assistance message reported by the terminal device. The reported assistance message is used to request the network device to reconfigure the target parameter, so that the network device reconfigures the target parameter based on the assistance message.

In embodiments of this application, first, a network device configures first configuration information and second configuration information. The first configuration information is used to indicate an SRS resource used for a CB and/or whether the SRS used for the CB and an SRS used for antenna switching AS are multiplexed, and the second configuration information is used to indicate a waveform used for communication between the network device and a terminal device and a maximum quantity of transport layers. Second, the network device sends the first configuration information and the second configuration information to the terminal device. The first configuration information and the second configuration information are used by the terminal device to determine whether a condition that the SRS used for the CB and the SRS used for AS are not multiplexed is met. The second configuration information is used by the terminal device to determine whether a condition that an upper limit of an actual quantity of transport layers is less than a quantity of antennas actually used by the terminal device for transmission is met. Finally, when the two conditions are met, the network device receives the SRS that is used for the CB and that is sent by the terminal device in an SCDD manner. Therefore, a scenario in which the SRS used for the CB is sent in the SCDD manner is extended, and transmit power is increased.

With reference to the second aspect, in some implementations of the second aspect, the first configuration information is further used to indicate a quantity of antenna ports for the SRS used for the CB. That the network device receives the SRS that is used for the CB and that is sent by the terminal device in a small cyclic delay diversity SCDD manner includes: When the upper limit of the actual quantity of transport layers is greater than or equal to 2, the network device receives the SRS that is used for the CB and that is sent by the terminal device in the SCDD manner on N antenna ports for the SRS used for the CB through a plurality of antennas. N is equal to the upper limit of the actual quantity of transport layers. Alternatively, when the upper limit of the actual quantity of transport layers is less than 2, the network device receives the SRS that is used for the CB and that is sent by the terminal device in the SCDD manner on one antenna port for the SRS used for the CB through a plurality of antennas.

With reference to the second aspect, in some implementations of the second aspect, when the waveform is the DFT-s-OFDM waveform, the upper limit of the actual quantity of transport layers is 1.

With reference to the second aspect, in some implementations of the second aspect, when the waveform is the CP-OFDM waveform, the upper limit of the actual quantity of transport layers is the maximum quantity of transport layers.

With reference to the second aspect, in some implementations of the second aspect, the first configuration information is carried in an SRS configuration message.

With reference to the second aspect, in some implementations of the second aspect, the second configuration information is carried in a physical uplink shared channel PUSCH configuration message.

With reference to the second aspect, in some implementations of the second aspect, the maximum quantity of transport layers is less than or equal to a minimum value in the quantity of antenna ports for the SRS used for the CB and a quantity of transmit antennas, and the quantity of antenna ports for the SRS used for the CB is less than the quantity of transmit antennas.

According to a third aspect, a terminal device is provided, including: a transceiver module, configured to receive first configuration information and second configuration information that are sent by a network device, where the first configuration information is used to indicate an SRS resource used for a codebook CB and/or whether the SRS used for the CB and an SRS used for antenna switching AS are multiplexed, the second configuration information is used to indicate a waveform used for communication between the network device and the terminal device and a maximum quantity of transport layers, and the waveform includes a discrete Fourier transform spread orthogonal frequency division multiplexing DFT-s-OFDM waveform and/or a cyclic prefix orthogonal frequency division multiplexing CP-OFDM waveform; a processing module, configured to determine, based on the first configuration information, whether a first preset condition is met. The first preset condition includes: The SRS used for the CB and the SRS used for antenna switching AS are not multiplexed. The processing module is further configured to determine, based on the second configuration information, whether a second preset condition is met. The second preset condition includes: An upper limit of an actual quantity of transport layers is less than a quantity of antennas actually used by the terminal device for transmission, and the upper limit of the actual quantity of transport layers is determined based on the waveform and the maximum quantity of transport layers. When the first preset condition and the second preset condition are met, the transceiver module is further configured to send the SRS used for the CB to the network device in a small cyclic delay diversity SCDD manner.

With reference to the third aspect, in some implementations of the third aspect, the first configuration information is further used to indicate a quantity of antenna ports for the SRS used for the CB. The processing module is further configured to determine whether the upper limit of the actual quantity of transport layers is greater than or equal to 2. The transceiver module is further configured to: when the upper limit of the actual quantity of transport layers is greater than or equal to 2, send the SRS used for CB to the network device in the SCDD manner on N antenna ports for the SRS used for the CB through a plurality of antennas, where N is equal to the upper limit of the actual quantity of transport layers; or when the upper limit of the actual quantity of transport layers is less than 2, send the SRS used for the CB to the network device in the SCDD manner on one antenna port for the SRS used for the CB through a plurality of antennas.

With reference to the third aspect, in some implementations of the third aspect, when the waveform is the DFT-s-OFDM waveform, the upper limit of the actual quantity of transport layers is 1.

With reference to the third aspect, in some implementations of the third aspect, when the waveform is the CP-OFDM waveform, the upper limit of the actual quantity of transport layers is the maximum quantity of transport layers.

With reference to the third aspect, in some implementations of the third aspect, the first configuration information is carried in an SRS configuration message.

With reference to the third aspect, in some implementations of the third aspect, the second configuration information is carried in a physical uplink shared channel PUSCH configuration message.

With reference to the third aspect, in some implementations of the third aspect, the maximum quantity of transport layers is less than or equal to a minimum value in the quantity of antenna ports for the SRS used for the CB and a quantity of transmit antennas, and the quantity of antenna ports for the SRS used for the CB is less than the quantity of transmit antennas.

According to a fourth aspect, a network device is provided, including: a processing module, configured to configure first configuration information and second configuration information, where the first configuration information is used to indicate an SRS resource used for a codebook CB and/or whether the SRS used for the CB and an SRS used for antenna switching AS are multiplexed, the second configuration information is used to indicate a waveform used for communication between the network device and a terminal device and a maximum quantity of transport layers, and the waveform includes a discrete Fourier transform spread orthogonal frequency division multiplexing DFT-s-OFDM waveform and/or a cyclic prefix orthogonal frequency division multiplexing CP-OFDM waveform; a transceiver module, configured to send the first configuration information and the second configuration information to the terminal device. The first configuration information is used by the terminal device to determine whether a first preset condition is met. The first preset condition includes: The SRS used for the CB and the SRS used for antenna switching AS are not multiplexed. The second configuration information is used by the terminal device to determine whether a second preset condition is met. The second preset condition includes: An upper limit of an actual quantity of transport layers is less than a quantity of antennas actually used by the terminal device for transmission, and the upper limit of the actual quantity of transport layers is determined based on the waveform and the maximum quantity of transport layers. The transceiver module is further configured to receive the SRS that is used for the CB and that is sent by the terminal device in a small cyclic delay diversity SCDD manner. The SRS that is used for the CB and that is sent by the terminal device in the SCDD manner is sent when the terminal device determines that the first preset condition and the second preset condition are met.

With reference to the fourth aspect, in some implementations of the fourth aspect, the first configuration information is further used to indicate a quantity of antenna ports for the SRS used for CB. The transceiver module is further configured to: when the upper limit of the actual quantity of transport layers is greater than or equal to 2, receive the SRS that is used for the CB and that is sent by the terminal device in the SCDD manner on N antenna ports for the SRS used for the CB through a plurality of antennas, where N is equal to the upper limit of the actual quantity of transport layers; or when the upper limit of the actual quantity of transport layers is less than 2, receive the SRS that is used for the CB and that is sent by the terminal device in the SCDD manner on one antenna port for the SRS used for the CB through a plurality of antennas.

With reference to the fourth aspect, in some implementations of the fourth aspect, when the waveform is the DFT-s-OFDM waveform, the upper limit of the actual quantity of transport layers is 1.

With reference to the fourth aspect, in some implementations of the fourth aspect, when the waveform is the CP-OFDM waveform, the upper limit of the actual quantity of transport layers is the maximum quantity of transport layers.

With reference to the fourth aspect, in some implementations of the fourth aspect, the first configuration information is carried in an SRS configuration message.

With reference to the fourth aspect, in some implementations of the fourth aspect, the second configuration information is carried in a physical uplink shared channel PUSCH configuration message.

With reference to the fourth aspect, in some implementations of the fourth aspect, the maximum quantity of transport layers is less than or equal to a minimum value in the quantity of antenna ports for the SRS used for the CB and a quantity of transmit antennas, and the quantity of antenna ports for the SRS used for the CB is less than the quantity of transmit antennas.

According to a fifth aspect, a communication apparatus is provided. The apparatus may be a terminal device, or may be a chip in the terminal device. The apparatus may include a processing unit and a transceiver unit. When the apparatus is the terminal device, the processing unit may be a processor, and the transceiver unit may be a transceiver. The terminal device may further include a storage unit, and the storage unit may be a memory. The storage unit is configured to store instructions, and the processing unit executes the instructions stored in the storage unit, so that the terminal device performs the method in the first aspect. When the apparatus is the chip in the terminal device, the processing unit may be a processor, and the transceiver unit may be an input/output interface, a pin, a circuit, or the like. The processing unit executes instructions stored in a storage unit, so that the terminal device performs the method in the first aspect. The storage unit may be a storage unit (for example, a register or a cache) in the chip, or may be a storage unit (for example, a read-only memory or a random access memory) that is in the terminal device and that is outside the chip.

According to a sixth aspect, a communication apparatus is provided. The apparatus may be a network device, or may be a chip in the network device. The apparatus may include a processing unit and a transceiver unit. When the apparatus is the network device, the processing unit may be a processor, and the transceiver unit may be a transceiver. The network device may further include a storage unit, and the storage unit may be a memory. The storage unit is configured to store instructions, and the processing unit executes the instructions stored in the storage unit, so that the network device performs the method in the second aspect. When the apparatus is the chip in the network device, the processing unit may be a processor, and the transceiver unit may be an input/output interface, a pin, a circuit, or the like. The processing unit executes instructions stored in a storage unit, so that the network device performs the method in the second aspect. The storage unit may be a storage unit (for example, a register or a cache) in the chip, or may be a storage unit (for example, a read-only memory or a random access memory) that is in the network device and that is outside the chip.

According to a seventh aspect, a computer program product is provided. The computer program product includes computer program code, and when the computer program code is run on a computer, the computer is enabled to perform the method in the foregoing aspect.

It should be noted that the computer program code can be totally or partially stored in a first storage medium. The first storage medium can be encapsulated with a processor, or encapsulated separately from a processor. This is not specifically limited in this embodiment of this application.

According to an eighth aspect, a computer-readable medium is provided. The computer-readable medium stores program code, and when the computer program code is run on a computer, the computer is enabled to perform the method in the foregoing aspect.

**BRIEF DESCRIPTION OF DRAWINGS**

FIG. 1 is a schematic diagram of a communication system 100 according to a method according to an embodiment of this application;

FIG. 2 is a schematic flowchart of SCDD precoding in the conventional technology;

FIG. 3 is a schematic flowchart of an SRS transmission method according to an embodiment of this application;

FIG. 4 is a schematic flowchart of communication between a terminal device and a network device according to an embodiment of this application;

FIG. 5 is a schematic diagram of a communication device according to an embodiment of this application;

FIG. 6 is a schematic diagram of a structure of a terminal device according to an embodiment of this application;

FIG. 7 is a schematic diagram of a communication device according to another embodiment of this application; and

FIG. 8 is a schematic diagram of a structure of a network device according to an embodiment of this application.

**DESCRIPTION OF EMBODIMENTS**

The following describes technical solutions of this application with reference to accompanying drawings.

The technical solutions of embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communications system, a future 5th generation (5th generation, 5G) system, or a new radio (new radio, NR) system.

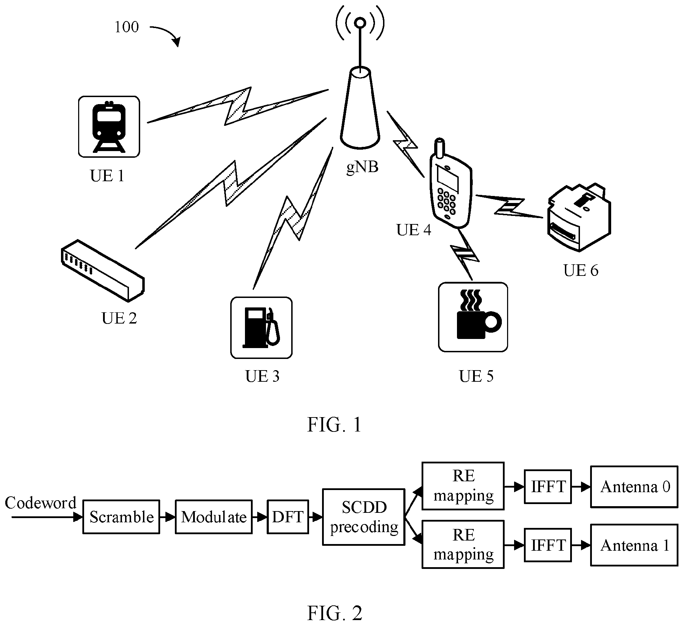

To facilitate understanding of embodiments of this application, a communication system used in a method according to embodiments of this application is first described in detail with reference to FIG. 1. FIG. 1 is a schematic diagram of a communication system 100 used in a method according to an embodiment of this application. As shown in the figure, the communication system 100 may include at least one network device, for example, a base station (gNB) in a 5G system shown in FIG. 1. The communication system 100 may further include at least one terminal device, for example, user equipment (user equipment, UE) 1 to UE 6 shown in FIG. 1. The network device may communicate with each terminal device over a radio link. For example, the network device may send configuration information to the terminal device, and the terminal device may send uplink data to the network device based on the configuration information. For another example, the network device may send downlink data to the terminal device. Therefore, a communication system may include the gNB and the UE 1 to the UE 6 in FIG. 1.

A communication system may alternatively include the terminal devices in the communication system 100, for example, the UE 4 to the UE 6. For example, the UE 4 may control the UE 5 and the UE 6 to execute corresponding instructions. This is not limited in this application.

A terminal device in embodiments of this application may be user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broader sense, the wearable intelligent device is full-featured, has a large size, and can implement all or some functions without depending on a smartphone. For example, the wearable intelligent device is a smart watch or smart glasses. Alternatively, the wearable intelligent device focuses only on a specific application function, and needs to be used with another device such as a smartphone. For example, the wearable intelligent device is a smart wristband, a smart helmet, or smart jewelry for physical sign monitoring.

In addition, in embodiments of this application, the terminal device may alternatively be a terminal device in an internet of things (internet of things, IoT) system. IoT is an important part of future information technology development. A main technical feature of the IoT is connecting things to networks by using communications technologies, to implement an intelligent network for interconnection between persons and machines, and between things.

In embodiments of this application, the IoT technology can implement massive connections, in-depth coverage, and terminal power saving by using, for example, a narrow band (narrow band) NB technology. For example, the NB includes only one resource block (resource block, RB). In other words, a bandwidth of the NB is only 180 KB. To implement massive access, terminals need to be discrete in access. According to a communication method in embodiments of this application, a congestion problem that occurs in the IoT technology when massive terminals access a network by using the NB can be effectively resolved.

In the embodiments of this application, the network device may be a device configured to communicate with the terminal device. The network device may be a base transceiver station (base transceiver station, BTS) in a global system for mobile communications (global system for mobile communications, GSM) system or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a scenario of a cloud radio access network (cloud radio access network, CRAN). Alternatively, the network device may be a relay node, an access point, a vehicle-mounted device, a wearable device, a network device in a future 5G network, a network device in a future evolved PLMN network, or the like, may be an access point (access point, AP) in a WLAN, or may be a gNB in a new radio (new radio, NR) system. This is not limited in the embodiments of this application.

In some deployments, a gNB may include a central unit (central unit, CU) and a DU. The gNB may further include a radio frequency unit (radio unit, RU). The CU implements a part of functions of the gNB, and the DU implements a part of the functions of the gNB. For example, the CU implements functions of a radio resource control (radio resource control, RRC) layer and a packet data convergence protocol (packet data convergence protocol, PDCP) layer. The DU implements functions of a radio link control (radio link control, RLC) layer, a media access control (media access control, MAC) layer, and a physical (physical, PHY) layer. Because information about the RRC layer finally becomes information about the PHY layer, or is converted from the information about the PHY layer, in this architecture, higher layer signaling such as RRC layer signaling may also be considered to be sent by the DU, or sent by the DU and the CU together It may be understood that the network device may be a CU node, a DU node, or a device including a CU node and a DU node. In addition, the CU may be classified as a network device in the radio access network (radio access network, RAN), or the CU may be classified as a network device in the core network (core network, CN). This is not limited in this application.

In addition, in embodiments of this application, the network device serves a cell, and the terminal device communicates with the network device by using a transmission resource (for example, a frequency domain resource, namely, a spectrum resource) used by the cell. The cell may be a cell corresponding to the network device (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are applicable to providing a high-rate data transmission service.

In addition, a plurality of cells may simultaneously work in a same frequency band on a carrier in the LTE system or the 5G system. In some special scenarios, it may be considered that a concept of the carrier is equivalent to that of the cell. For example, in a carrier aggregation (carrier aggregation, CA) scenario, both a carrier index of a secondary component carrier and a cell identifier (cell identifier, Cell ID) of a secondary cell that works on the secondary component carrier are carried when the secondary component carrier is configured for UE. In this case, it may be considered that the concept of the carrier is equivalent to that of the cell. For example, for the UE, accessing a carrier is equivalent to accessing a cell.

A core network device may be connected to a plurality of network devices, and configured to control the network devices, and distribute, to the network devices, data received from a network side (for example, the Internet).

The foregoing listed functions and specific implementations of the terminal device, the network device, and the core network device are merely examples for description, and this application is not limited thereto.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux® operating system, a Unix® operating system, an Android® operating system, an iOS® operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

It should be further understood that FIG. 1 is only a simplified schematic diagram of an example for ease of understanding. The communication system 100 may further include another network device or another terminal device, which is not shown in FIG. 1.

For ease of understanding the embodiments of this application, several concepts used in the following are first briefly described.

1. Sounding reference signal (sounding reference signal, SRS)

In one aspect, a network device may estimate a channel state of an uplink channel based on an SRS sent by a terminal, to schedule a terminal device to transmit a PUSCH. In another aspect, for a communication system with channel reciprocity, for example, a time division duplexing (time division duplexing, TDD) system, based on channel reciprocity, the SRS may also be used by the network device to estimate a channel state of a downlink channel.

2. Antenna port (antenna port)

An antenna port is a logical concept. One antenna port may be one physical transmit antenna, or may be a combination of a plurality of physical transmit antennas. In the two cases, a receiver (receiver) usually does not decompose a signal from a same antenna port. Because from a perspective of the receiver, regardless of whether a signal is formed by a single physical transmit antenna or combined by a plurality of physical transmit antennas, the antenna port is defined by a reference signal (reference signal, RS) corresponding to the antenna port. When the RS is an SRS, the network device may obtain channel estimation of the antenna port based on the SRS sent by the terminal device.

3. SRS resource (resource) and SRS resource set (resource set)

Usually, one SRS resource set includes one or more SRS resources used to transmit an SRS.

In a current communications protocol (for example, an NR protocol), a plurality of functions are configured for the SRS. Resources for transmitting the SRS with different functions are usually configured based on the SRS resource set and a framework of the SRS resource. Different functions require different SRSs. As a result, configurations of the SRS resource set and the SRS resource are different.

Specifically, functions of the SRS usually include: determining a codebook (code book, CB)-based PUSCH transmission mode, determining a non code book (non code book, NCB)-based PUSCH transmission mode, an antenna switching (antenna switching, AS) function, beam management, and the like.

The antenna switching function of the SRS is used in a scenario in which a quantity of antennas (or referred to as "transmit antennas") of a transmitter (Transmitter, Tx) of the terminal device in the TDD is less than a quantity of antennas (or referred to as "receive antennas") of a receiver (Receiver, Rx). For example, a radio frequency (Radio Frequency, RF) channel of the terminal device has high costs, and consequently an uplink transmission channel of the terminal device is limited. Because the quantity of transmit antennas of the terminal device is less than the quantity of receive antennas, when the network device measures, by using the SRS, a channel state of a downlink channel corresponding to the receive antenna, the terminal device needs to send an SRS corresponding to the receive antenna to the network device through the transmit antenna in an antenna switching (or referred to as antenna switch) manner, so that the network device can estimate channel states corresponding to all receive antennas. To be specific, for SRS resources in the SRS resource set used for antenna switching, one SRS resource is sent each time by using a Tx channel that can be used for sending, and then remaining SRS resources on Rx channels are sent by using another Rx channel. These SRS resources are sent on different orthogonal frequency division multiplexing (orthogonal frequency division multiplexing, OFDM) symbols. The base station obtains channel state information of all Rx channels through switching of SRS resources on different antennas.

The following separately uses a 1T2R terminal device, a 2T4R terminal device, and a 1T4R terminal device as an example to describe configuration manners of an SRS resource set and an SRS resource that have an "antenna switching" function.

The 1T2R terminal device has one transmit antenna and two receive antennas. The SRS resource set configured by the network device for the terminal device includes two SRS resources, and each SRS resource corresponds to one antenna port. The terminal device polls one Rx antenna each time, and sends an SRS corresponding to the Rx antenna through the Tx antenna. In this way, the terminal device needs to send SRSs corresponding to the two Rx antennas on the two SRS resources, so that the network device can obtain channel states of channels corresponding to the two Rx antennas.

The 2T4R terminal device has two transmit antennas and four receive antennas. The SRS resource set configured by the network device for the terminal device includes two SRS resources, and each SRS resource corresponds to two antenna ports. The terminal device may poll two Rx antennas each time. A same SRS resource may correspond to different antenna ports, and the SRS resource is sent through both Tx antennas. The terminal device needs to send SRSs corresponding to the four Rx antennas on the two SRS resources, so that the network device can obtain channel states of channels corresponding to the four Rx antennas.

For the 1T4R terminal device, there may be two resource configuration manners:

Manner 1: For a periodic and semi-persistent SRS, the network device configures one SRS resource set for the terminal device. The SRS resource set includes four SRS resources, and each SRS resource corresponds to four antenna ports. The terminal device polls one Rx antenna each time, and the terminal device sends the SRS through one Tx antenna on an SRS resource corresponding to the Rx antenna. The terminal device needs to send SRS resources corresponding to the four Rx antennas on the four SRS resources, so that the network device can obtain channel states of channels corresponding to the four Rx antennas.

Manner 2: For an aperiodic SRS, there are two polling manners: 1. The network device configures two SRS resource sets for the terminal device, and each SRS resource set includes two SRS resources. 2. The network device configures two SRS resource sets for the terminal device, one SRS resource set includes one SRS resource, and the other SRS resource set includes three SRS resources.

It should be understood that when the terminal device polls SRSs sent by different receive antennas, a period of time needs to be reserved between SRS resources, so that the terminal device polls a next receive antenna. In other words, a specific guard period needs to be reserved between SRS resources. Usually, each SRS resource occupies one OFDM symbol, and the guard period between SRS resources is one OFDM symbol.

4. Small cyclic delay diversity (small cyclic delay diversity, SCDD)

SCDD may be understood as sending a same signal through a plurality of antennas simultaneously. The SCDD may increase a total transmit power. For example, if a signal A is simultaneously sent through two antennas, the transmit power can be doubled, that is, 3 dB. For another example, if a signal A is simultaneously sent through four antennas, the transmit power can be increased by four times, that is, 6 dB.

The transmit power of channels such as a PUSCH, a physical random access channel (physical random access channel, PRACH), a physical uplink control channel (physical uplink control channel, PUCCH), and an SRS may be increased in an SCDD manner.

A coding process of the SCDD may be expressed by using the following formula:

$$y = W \times D(k) \times Ux$$

W is a precoding matrix, and a dimension of the precoding matrix is Ntx × Ntx'. Ntx is a quantity of transmit antennas. For example, Ntx may be 2, 4, 8, 32, 64, 256, or the like. Ntx' is a dimension of a subspace used for precoding. For example, Ntx' may be 2. When Ntx is equal to Ntx', W may be an identity matrix of Ntx × Ntx.

D(k) is a frequency-modulation-related cyclic delay matrix, and a dimension of the cyclic delay matrix is Ntx' × Ntx', where k is a resource element (resource element, RE) index.

Ux is a stream virtualization matrix, and a dimension of the stream virtualization matrix is Ntx × R. For example, the first R columns may be selected from a discrete Fourier transform (discrete Fourier transform, DFT) matrix of Ntx' × Ntx'. R is a rank or a quantity of streams. When the rank R = 1, $D(k) = \text{diag}\{ 1, e^{-j2\pi kd}\}$, where d is a delay (delay), d may be very small (e.g., d may be 0.1 ms or 0.2 ms) and is usually much shorter than a cyclic prefix (cyclic prefix, CP), so that effective delay spread after the SCDD is applied is still within the CP, and $U = [1\ 1]^T$. Therefore, $W \times D(k) \times Ux = [1, e^{-j2\pi kd}]^T$. The SCDD is equivalent to a transmit diversity to which a delay phase shift $e^{-j2\pi kd}$ is added according to a subcarrier index.

As shown in FIG. 2, an example in which a communication system or device applies an SCDD precoding operation to a DFT-spread-OFDM (DFT-s-OFDM) waveform is provided. Specifically, the following steps may be included. Step 1: The communication system or device scrambles one or more codewords. Step 2: Modulate the scrambled codeword. Step 3: Perform DFT on the modulated codeword. Step 4: Perform SCDD precoding on the codeword obtained after DFT. Step 5: Perform RE mapping on an SCDD-precoded signal. Step 6: Perform inverse fast Fourier transform (inverse fast Fourier transform, IFFT) on the mapped signal. Step 7: Transmit the signal obtained after IFFT through a corresponding antenna.

6. Waveform adaptation

In an NR system, a CP-OFDM waveform is introduced, and the CP-OFDM waveform is used for uplink sending. The CP-OFDM waveform has high resource utilization and allocation flexibility. However, a peak-to-average ratio of the CP-OFDM waveform is high. As a result, compared with the DFT-s-OFDM waveform, a max power reduction (max power reduction, MPR) of the CP-OFDM waveform is large.

Table 1 shows the MPR specified in the protocol 38.101.

As shown in Table 1, when modulation schemes used by both the DFT-s-OFDM waveform and the CP-OFDM waveform are QPSK, under inner RB allocation (Inner RB), an MPR of the CP-OFDM waveform is 1.5 dB greater than an MPR of the DFT-s-OFDM waveform. Under outer RB allocation (Outer RB), an MPR of the CP-OFDM waveform is 2 dB greater than an MPR of the DFT-s-OFDM waveform.

**Table 1**

| Modulation scheme (Modulation) | | MPR (dB) | | |
|---|---|---|---|---|
| | | Edge RB allocations (Edge RB allocations) | Outer RB allocations (outer RB allocations) | Inner RB allocations (Inner RB allocations) |
| DFT-s-OFDM waveform | π/2 binary phase shift keying (Binary Phase Shift Keying, BPSK) | ≤ 3.5[1] | ≤ 1.2[1] | ≤ 0.2[1] |
| | | 0.5[2] | 0.5[2] | 0[2] |
| | Quadrature phase shift keying (Quadrature Phase Shift Keying, QPSK) | ≤ 1 | | **0** |
| | Quadrature amplitude modulation (Quadrature Amplitude Modulation, QAM) of 16 Symbols | ≤ 2 | | ≤ 1 |
| | 64 QAM | ≤ 2.5 | | |
| | 256 QAM | 4.5 | | |

(continued)

| Modulation scheme (Modulation) | | MPR (dB) | | |
|---|---|---|---|---|
| | | Edge RB allocations (Edge RB allocations) | Outer RB allocations (outer RB allocations) | Inner RB allocations (Inner RB allocations) |
| CP-OFDM Waveform | QPSK | ≤ **3** | | ≤ **1.5** |
| | 16 QAM | ≤ 3 | | ≤ 2 |
| | 64 QAM | ≤ 3.5 | | |
| | 256 QAM | ≤ 6.5 | | |

Waveform adaptation switching means that the network device switches an uplink waveform of the terminal device between the DFT-s-OFDM waveform and the CP-OFDM waveform based on signal quality of the terminal device. For example, at a cell edge (where signals are poor, and the modulation scheme is usually QPSK), using the DFT-s-OFDM waveform brings a maximum power gain of 1.5 dB to 2 dB.

Table 2 shows advantages and disadvantages of the DFT-s-OFDM waveform and the CP-OFDM waveform.

**Table 2**

| Waveform | Advantage | Disadvantage |
|---|---|---|
| CP-OFDM Waveform | a. Flexible allocation supports data and pilot to share symbols without losing RE resources. b. MIMO transmission is supported. | The peak-to-average ratio is large, and consequently, the MPR is large. |
| DFT-s-OFDM waveform | The peak-to-average ratio is small, and correspondingly, the MPR is small. | a. Allocation in a common multiple of 2, 3, and 5 does not support data and pilot to share symbols, and consequently, some RE resources are lost. b. MIMO is not supported, but only single-stream is supported. |

With reference to Table 1 and Table 2, it can be learned that the advantage (for example, for a cell edge, the peak-to-average ratio of the DFT-s-OFDM waveform are small, so that a maximum power of the DFT-s-OFDM waveform is reduced by 1.5 dB to 2 dB) of the DFT-s-OFDM waveform can cover up the disadvantage of the DFT-s-OFDM waveform.

In the communication system, for a current SRS used for a CB, when the following condition A and condition B are met, the SRS used for the CB may be sent in an SCDD manner.

Condition A: The SRS used for the CB and an SRS used for AS are not multiplexed. Condition B: A quantity of ports for the SRS used for the CB is less than an actual quantity of transmit antennas of the terminal device.

The actual quantity of transmit antennas may be understood as an actual quantity of uplink transmit antennas.

That the SRS used for the CB and the SRS used for AS are multiplexed may be understood as that the SRS has a CB function, and the SRS further has an AS function.

Table 3 shows an example in which the terminal device sends the SRS used for the CB to the network device in the SCDD manner in the conventional technology.

**Table 3**

| No. | CB/AS SRS configuration | Quantity of CB ports (port) | CB/AS multiplexed or not | Whether the SRS used for the CB can be sent in the SCDD mode |
|---|---|---|---|---|
| 1 | 2T4R | 2 | Yes | Disable |
| 2 | 2T4R | 2 | No | Disable |
| 3 | 2T4R | 1 | Yes | Disable |
| **4** | **2T4R** | **1** | **No** | **Enable** |
| 5 | 1T4R | 2 | No | No |

(continued)

| No. | CB/AS SRS configuration | Quantity of CB ports (port) | CB/AS multiplexed or not | Whether the SRS used for the CB can be sent in the SCDD mode |
|---|---|---|---|---|
| 6 | 1T4R | 1 | Yes | No |
| **7** | **1T4R** | **1** | **No** | **Enable** |
| 8 | 2T2R | 2 | Yes | Disable |
| 9 | 2T2R | 2 | No | Disable |
| 10 | 2T2R | 1 | Yes | Disable |
| **11** | **2T2R** | **1** | **No** | **Enable** |
| 12 | 4T4R | 4 | Yes | Disable |
| 13 | 4T4R | 4 | No | Disable |
| 14 | 4T4R | 1 or 2 | Yes | Disable |
| **15** | **4T4R** | **1 or 2** | **No** | **Enable** |

For example, as shown by a sequence number 5 in Table 3, the quantity of ports that is for the SRS used for the CB and that is configured by the network device is 2, which is greater than a maximum quantity of ports that can be supported by the switch mode 1 T4R. In this case, due to a possible reason for which the terminal device supports the 1 T4R/2T4R capability, a network device side changes the switch mode to 1T4R, but the network device side does not correspondingly change the quantity of ports in an SRS configuration message.

For another example, as shown by a sequence number 7 in Table 3, the switch mode is 1T4R, and the quantity of ports that is for the SRS used for the CB and that is configured by the network device is 1. Moreover, the terminal may have a transmit capability of more than one antenna, and therefore can also use the SCDD.

It can be learned from Table 3 that when the SRS used for the CB and the SRS used for the AS are multiplexed, the quantity of ports is equal to 1, and the quantity of transmit antennas is greater than 1, the terminal device determines that the condition A and the condition B are met. In this case, if the communication system is in a single-stream mode, the terminal device determines that the SRS used for the CB may be sent in the SCDD manner. However, when the SRS used for the CB and the SRS used for AS are not multiplexed, the quantity of ports is greater than or equal to 2, and the quantity of transmit antennas is equal to the quantity of ports, the communication system cannot uniquely determine whether a single-stream mode or a multi-stream mode is used. Therefore, the terminal device cannot determine whether the SRS used for the CB can be sent in the SCDD manner.

Therefore, this application provides an SRS transmission method, to determine, based on an upper limit of an actual quantity of transport layers in a communication system, whether an SRS used for a CB can be sent in an SCDD manner. Therefore, a scenario in which the SRS used for the CB is sent in the SCDD manner is extended.

With reference to the accompanying drawings, the following describes the SRS transmission method provided in embodiments of this application.

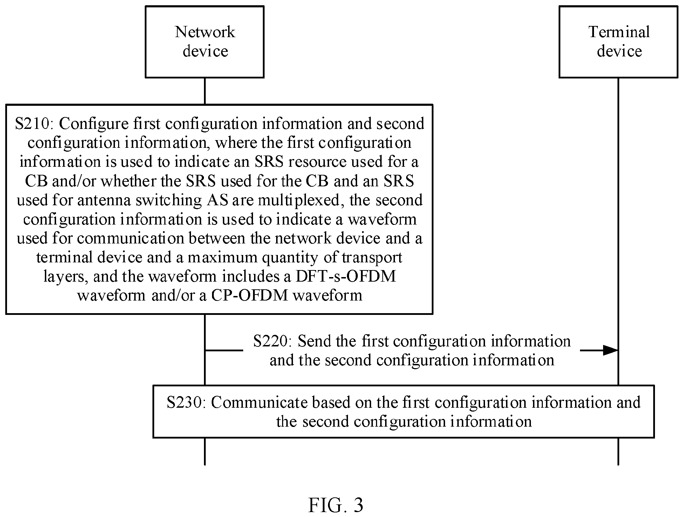

FIG. 3 is a schematic flowchart of an SRS transmission method 200 according to an embodiment of this application.

Step 210: A network device configures first configuration information and second configuration information. The first configuration information is used to indicate an SRS resource used for a CB and/or whether the SRS used for the CB and an SRS used for antenna switching AS are multiplexed, and the second configuration information is used to indicate a waveform used for communication between the network device and a terminal device and a maximum quantity of transport layers. The waveform includes a DFT-s-OFDM waveform and/or a CP-OFDM waveform

Optionally, the network device may determine whether a time-frequency resource of the SRS used for the CB and a time-frequency resource of the SRS used for AS are a same time-frequency resource, to determine whether the SRS used for the CB and the SRS used for AS are multiplexed. After the network device determines whether the SRS used for the CB and the SRS used for AS are multiplexed, the network device may indicate, by using the first configuration information, whether the SRS used for the CB and the SRS used for AS are multiplexed.

When the time-frequency resource of the SRS used for the CB overlaps the time-frequency resource of the SRS used for AS, the network device determines that the SRS used for the CB and the SRS used for AS are multiplexed. When the time-frequency resource of the SRS used for the CB does not overlap the time-frequency resource of the SRS used for AS, the network device determines that the SRS used for the CB and the SRS used for AS are not multiplexed.

For example, the SRS resource indicated by the first configuration information may be indicated by using an identifier of the SRS resource.

In a possible implementation, the second configuration information may respectively indicate, by using two fields, the waveform used for communication between the network device and the terminal device and the maximum quantity of transport layers. For example, the second configuration information may include a first field and a second field. The first field is used to indicate the waveform used for communication between the network device and the terminal device, and the second field is used to indicate the maximum quantity of transport layers.

In another possible implementation, the second configuration information may indicate, by using one field, the waveform used for communication between the network device and the terminal device and the maximum quantity of transport layers. For example, the second configuration information may include a third field. The third field is used to indicate the waveform used for communication between the network device and the terminal device and the maximum quantity of transport layers.

The following describes an example in which the second configuration information may respectively indicate, by using two fields, the waveform used for communication between the network device and the terminal device and the maximum quantity of transport layers.

For example, the first field may separately use "Enable" (Enable) and "Disable" (Disable) to indicate the waveform used for communication between the network device and the terminal device. In an embodiment, the first field may use Disable to indicate that the waveform used for communication between the network device and the terminal device is the DFT-s-OFDM waveform, and the first field may use Disable to indicate that the waveform used for communication between the network device and the terminal device is the CP-OFDM waveform. In another embodiment, the first field may use Enable to indicate that the waveform used for communication between the network device and the terminal device is the CP-OFDM waveform, and the first field may use Disable to indicate that the waveform used for communication between the network device and the terminal device is the DFT-s-OFDM waveform.

The following describes an example in which the first field uses Enable to indicate that the waveform used for communication between the network device and the terminal device is the DFT-s-OFDM waveform, and the first field uses Disable to indicate that the waveform used for communication between the network device and the terminal device is the CP-OFDM waveform.

A communication system including the network device and the terminal device may be classified into a single-stream mode and a multi-stream mode. A stream means a data stream. Single and multi means a quantity of channels of data transmitted simultaneously. Data transmission may include common single-antenna transmission, diversity transmission, and multi input multi output (multi input multi output, MIMO) spatial multiplexing. In common single-antenna transmission, there is only one data stream. Therefore, the single-stream mode is used. In diversity transmission, although data is transmitted through a plurality of channels, two data streams are transmitted in different sequences but have the same content. Therefore, for the terminal device, the single-stream mode is still used. MIMO spatial multiplexing simultaneously transmit different content through a plurality of antennas. For the terminal device, it is equivalent to that there are a plurality of data streams at a time. Therefore, the multi-stream mode is used.

For example, transmit antennas of the terminal device include an antenna A and an antenna B, and a signal A and a signal B need to be sent. If the terminal device sends the signal A through the antenna A at a time point t1, and the terminal device sends the signal B through the antenna A again at a time point t2, the single-stream mode is used. At the time point t1, if the terminal device sends the signal A through the antenna A, and sends the signal B through the antenna B, a dual-stream/multi-stream mode is used.

Optionally, the network device (or the communication system) may determine, based on a rank (Rank) of a channel matrix, whether current channel quality is suitable for the single-stream mode or the multi-stream mode. When the rank is 1, the current channel quality supports the single-stream mode. When the rank is greater than or equal to 2, the current channel quality supports the multi-stream mode.

Optionally, the network device may further determine, based on a minimum value in the maximum quantity of transport layers that is indicated by the network device in the second configuration information and an actual quantity of ranks of the channel matrix, whether the current channel quality is suitable for the single-stream mode or the multi-stream mode, and determine an actual quantity of transport ranks/layers.

For ease of description, the actual quantity of transport ranks/layers is described below as the actual quantity of transport layers.

The maximum quantity of transport layers indicated by the second configuration information may be understood as an upper limit of an actual quantity of transport layers that is determined by the communication system.

When the waveform used for communication between the network device and the terminal device is the DFT-s-OFDM waveform, it is implied that the upper limit of the actual quantity of transport layers can only be 1. In this case, the maximum quantity of transport layers indicated in the second field may be greater than 1, but the upper limit of the actual quantity of transport layers is still 1.

Optionally, the upper limit of the actual quantity of transport layers may be determined by using a minimum value in the maximum quantity of transport layers indicated by the second field and the maximum quantity of transport layers implied in the first field.

The actual quantity of transport layers is determined based on both the rank of the channel matrix and the upper limit of the actual quantity of transport layers. The rank of the channel matrix is variable.

Maximum quantity of transport layers ≤ min (quantity of SRS ports, quantity of transmit antennas). Quantity of SRS ports ≤ quantity of transmit antennas.

For example, the first configuration information may be carried in an SRS configuration message (SRS-Config).

For example, the second configuration information may be carried in a PUSCH configuration message (PUSCH-Config). In this case, the first field may be a transform precoder (transformPrecoder) field. The second field may be a maximum rank (maxRank) field.

In some embodiments, the first configuration information and the second configuration information may be carried in two messages respectively. In some other embodiments, the first configuration information and the second configuration information may be carried in different fields of a same message.

Specifically, the network device may receive an antenna switch capability message sent by the terminal device, and determine the first configuration information and the second configuration information based on the antenna switch capability message sent by the terminal device.

The antenna switch capability may be understood as a quantity of receive antennas and a quantity of transmit antennas in antennas of the terminal device.

S220: The network device sends the first configuration information and the second configuration information to the terminal device. Correspondingly, the terminal device receives the first configuration information and the second configuration information that are sent by the network device.

S230: The terminal device communicates with the network device based on the first configuration information and the second configuration information.

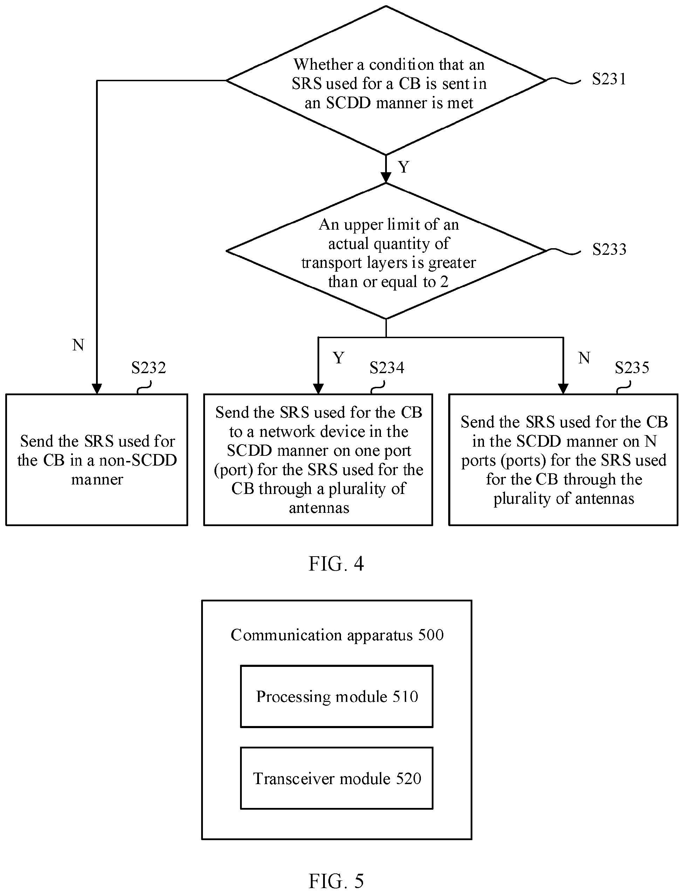

Specifically, as shown in FIG. 4, S230 may include S231 to S235.

S231: The terminal device determines whether a condition that the SRS used for the CB is sent in an SCDD manner is met.

The condition that the SRS used for the CB is sent in an SCDD manner includes: Condition 1: The SRS used for the CB and the SRS used for AS are not multiplexed. Condition 2: An upper limit of an actual quantity of transport layers is less than an actual quantity of transmit antennas of the terminal device.

In a possible implementation, when the first configuration information indicates whether the SRS used for the CB and the SRS used for AS are multiplexed, the terminal device may determine, based on the first configuration information, the SRS resource, the quantity of ports, and whether the SRS used for the CB and the SRS used for AS are multiplexed.

In another possible implementation, if the first configuration information does not indicate whether the SRS used for the CB and the SRS used for AS are multiplexed, the terminal device determines the SRS resource based on the first configuration information, so that the terminal device determines whether the SRS used for the CB and the SRS used for AS are multiplexed.

The terminal device may determine whether a time-frequency resource of the SRS used for the CB and a time-frequency resource of the SRS used for AS are a same time-frequency resource, to determine whether the SRS used for the CB and the SRS used for AS are multiplexed. When the time-frequency resource of the SRS used for the CB overlaps the time-frequency resource of the SRS used for AS, the terminal device determines that the SRS used for the CB and the SRS used for AS are multiplexed. When the time-frequency resource of the SRS used for the CB does not overlap the time-frequency resource of the SRS used for AS, the terminal device determines that the SRS used for the CB and the SRS used for AS are not multiplexed.

The terminal device determines, based on the second configuration information, the waveform used for communication between the network device and the terminal device and the maximum quantity of transport layers, to determine the upper limit of the actual quantity of transport layers.

When the waveform that is indicated by the first field and that is used for communication between the network device and the terminal device is the DFT-s-OFDM waveform, the upper limit of the actual quantity of transport layers is 1.

When the waveform that is used for communication between the network device and the terminal device and that is indicated by the first field is the CP-OFDM waveform, the upper limit of the actual quantity of transport layers is the maximum quantity of transport layers indicated by the second field.

When the terminal device determines that the condition that the SRS used for the CB is sent in the SCDD manner is not met, S232 is performed. When the terminal device determines that the condition that the SRS used for the CB is sent in the SCDD manner is met, S233 is performed.

S232: Send the SRS used for the CB to the network device in a non-SCDD manner.

S233: Determine whether the upper limit of the actual quantity of transport layers is greater than or equal to 2.

When the upper limit of the actual quantity of transport layers is equal to 1, S234 is performed. When the upper limit of the actual quantity of transport layers is greater than or equal to 2, S235 is performed.

Optionally, the first configuration information is further used to indicate a quantity of antenna ports (ports) of the SRS used for the CB. The terminal device performs the steps S24 and S235 based on the quantity of antenna ports that is of the SRS used for the CB and that is indicated by the first configuration information.

For example, the quantity of ports indicated by the first configuration information may be indicated by using a set of port identifiers (for example, may be port names) of the SRS used for the CB. For example, the port set may be {port 1, port 2, port 4}. In other words, the quantity of ports that can be used by the terminal device for the SRS used for the CB may be 1, 2, or 4.

S234: The terminal device sends the SRS used for the CB to the network device in the SCDD manner on one port for the SRS used for the CB through a plurality of antennas.

That the terminal device sends the SRS used for CB to the network device in the SCDD manner on the port of the SRS used for the CB through the plurality of antennas may be understood as that the terminal device sends the SRS used for the CB on a single port in the SCDD manner through the plurality of antennas. In this case, SRSs that are used for the CB and that are sent by the terminal device through the plurality of antennas are the same.

S235: The terminal device sends the SRS used for the CB in the SCDD manner on N ports for the SRS used for the CB through the plurality of antennas (in this case, the quantity of transmit antennas is greater than the quantity of ports). N is equal to the upper limit of the actual quantity of transport layers.

In a possible implementation, that the terminal device sends the SRS used for CB to the network device in the SCDD manner on the N ports for the SRS used for the CB through the plurality of antennas may be: The plurality of antennas are grouped into N groups, and the terminal device sends the SRS used for the CB on the single port in the SCDD manner through each antenna in each group of antennas. In this case, the SRS that is used for the CB and that is sent by the terminal device through each antenna in each group of antennas is the same.

Regardless of S234 or S235, the quantity of ports for the SRS used for the CB is equal to the upper limit of the actual quantity of transport layers.

In S234 and S235, the quantity of ports for the SRS used for the CB may be understood as an actual quantity of transmit ports.

Compared with Table 3, Table 4 shows a newly added scenario in which the terminal device may send the SRS to the network device in the SCDD manner. In all scenarios shown in Table 4, the SRS used for the CB and the SRS used for AS are not multiplexed.

**Table 4**

| No. | CB/AS SRS configuration | Quantity of CB Ports (port) | Second field | First field |
|---|---|---|---|---|
| 16 | 2T4R | 2 | 1 or 2 | Enable (Enable) |
| 17 | 2T4R | 2 | 1 | Enable (Enable) or Disable (Disable) |
| 18 | 1T4R | 2 | 1 or 2 | Enable (Enable) |
| 19 | 1T4R | 2 | 1 | Enable (Enable) or Disable (Disable) |
| 20 | 4T4R | 4 | 1 or 2 or 4 | Enable (Enable) |
| 21 | 4T4R | 4 | 1 or 2 | Enable (Enable) or Disable (Disable) |
| 22 | 2T2R | 2 | 1 or 2 | Enable (Enable) |
| 23 | 2T2R | 2 | 1 | Enable (Enable) or Disable (Disable) |

As shown in Table 4, Enable (Enable) represents the DFT-s-OFDM waveform, and the upper limit of the actual quantity of transport layers is 1. Disable (Disable) represents the CP-OFDM waveform, and the upper limit of the actual quantity of transport layers is the maximum quantity of transport layers indicated by the second field.

For example, as shown in sequence numbers 16, 17, 22, and 23 in Table 4, the quantity of transmit antennas of the terminal device is 2, and the quantity of ports that is for the SRS used for the CB and that is configured by the network device is 2. In this case, the quantity (2) of transmit antennas of the terminal device is equal to the quantity (2) of ports, so that it may be understood that the actual quantity of transmit antennas of the terminal device is 2.

For another example, as shown in sequence numbers 20 and 21 in Table 4, the quantity of transmit antennas of the terminal device is 4, and the quantity of ports configured by the network device is 4. In this case, the quantity (4) of transmit antennas of the terminal device is equal to the quantity (4) of ports, so that it may be understood that the actual quantity of transmit antennas of the terminal device is 4. The actual quantity of transmit antennas may be understood as that four antennas are used to simultaneously send the same SRS used for the CB.

For another example, as shown in sequence numbers 18 and 19 in Table 4, the terminal device actually has a 2T sending capability, but is configured by a network to have 1T4R due to reasons such as RRC reconfiguration. In other words, a quantity of transmit antennas is 1. In addition, the quantity of ports that is for the SRS used for the CB and that is configured by the network device is 2, and is not changed to a single port along with the 1T4R configuration. In this case, the terminal device is configured to have a quantity (1) of transmit antennas less than a quantity (2) of ports for the SRS used for the CB. In this case, it may be understood that the actual quantity of transmit antennas of the terminal device is 2. The actual quantity of transmit antennas may be understood as that the actual quantity of transmit antennas is 4, but two antennas are used to simultaneously send the same SRS used for the CB.

For example, as shown in the sequence number 16 in Table 4, the antenna switch capability reported by the terminal device is 2T4R, and the actual quantity of transmit antennas of the terminal device is 2. If the network device configures, for the terminal device based on the antenna switch capability reported by the terminal device, two ports for the SRS used for the CB, a configured maximum quantity of transport layers is 1 or 2, and a configured waveform used for communication between the network device and the terminal device is the DFT-s-OFDM waveform, the upper limit of the actual quantity of transport layers is 1. In this case, the terminal device performs S235. To be specific, the terminal device sends the SRS used for the CB on the single port in the SCDD manner through two transmit antennas. In this case, the terminal device simultaneously sends the same SRS used for the CB through the two antennas. In addition, the actual quantity of transmit ports is 1.

For example, as shown in the sequence number 19 in Table 4, the terminal device actually has a 2T sending capability, but is configured by a network to have 1T4R due to reasons such as RRC reconfiguration. In other words, the quantity of transmit antennas of the terminal device is 1. If the network device configures, for the terminal device based on the antenna switch capability reported by the terminal device, two ports for the SRS used for the CB, a configured maximum quantity of transport layers is 1, and a configured waveform used for communication between the network device and the terminal device is the DFT-s-OFDM waveform or the CP-OFDM waveform, the upper limit of the actual quantity of transport layers is 1. In this case, the terminal device performs S235. To be specific, the terminal device selects two transmit antennas from the four antennas, and sends the SRS on the single port in the SCDD manner through the two transmit antennas. In this case, the terminal device simultaneously sends the same SRS used for the CB through the two antennas. In addition, the actual quantity of transmit ports is 1.

For example, as shown by the sequence number 20 in Table 4, the antenna switch capability reported by the terminal device is 4T4R, and the actual quantity of transmit antennas of the terminal device is 4. The network device configures four ports for the terminal device based on the antenna switch capability reported by the terminal device, and the configured maximum quantity of transport layers may be 1, 2, or 4. If the configured waveform used for communication between the network device and the terminal device is the DFT-s-OFDM waveform, the upper limit of the actual quantity of transport layers is 1, and the terminal device performs S235. To be specific, the terminal device sends the SRS used for the CB on the single port in the SCDD manner through four antennas. In this case, the terminal device simultaneously sends the same SRS used for the CB through the four antennas. In addition, the actual quantity of transmit ports is 1.

For example, as shown in the sequence number 21 in Table 4, the antenna switch capability reported by the terminal device is 4T4R, and the actual quantity of transmit antennas of the terminal device is 4. The network device configures four ports for the terminal device based on the antenna switch capability reported by the terminal device, the configured maximum quantity of transport layers may be 1 or 2, and the configured waveform used for communication between the network device and the terminal device is the DFT-s-OFDM waveform or the CP-OFDM waveform.

When the configured waveform used for communication between the network device and the terminal device is the DFT-s-OFDM waveform, or when the configured waveform used for communication between the network device and the terminal device is the CP-OFDM waveform, and the configured maximum quantity of transport layers is 1, the upper limit of the actual quantity of transport layers is 1, and the terminal device performs S235. To be specific, the terminal device sends the SRS used for the CB on the single port in the SCDD manner through the four antennas. In this case, the terminal device simultaneously sends the same SRS used for the CB through the four antennas. In addition, the actual quantity of transmit ports is 1.

When the configured waveform used for communication between the network device and the terminal device is the CP-OFDM waveform, and the configured maximum quantity of transport layers is 2, the upper limit of the actual quantity of transport layers is 2. In this case, the terminal device needs to simultaneously send two different SRSs used for the CB. For example, the SRSs used for the CB may be an SRS 1 and an SRS 2. The terminal device performs S236. To be specific, the terminal device selects two antennas from the four antennas, and sends the SRS 1 on the single port in the SCDD manner through the two transmit antennas. In addition, the terminal device sends the SRS 2 on the single port in the SCDD manner through the remaining two antennas. In this case, the terminal device simultaneously sends the SRSs used for the CB through the four antennas. A same SRS used for the CB is sent through two of the four antennas, and a same SRS used for the CB is sent through the remaining two of the four antennas. In addition, the actual quantity of transmit ports is 2.

A biggest difference between embodiments provided in this application and the conventional technology lies in that conditions for determining, by the terminal device, whether to send the SRS used for the CB in the SCDD manner are different. In this embodiment of this application, when the terminal device determines that the SRS used for the CB and the SRS used for AS are not multiplexed, the terminal device no longer determines, based on the quantity of ports for the SRS used for the CB and the actual quantity of transmit antennas of the terminal device, whether the terminal device sends the SRS used for the CB in the SCDD manner, but determines, based on the upper limit of the actual quantity of transport layers and the actual quantity of transmit antennas of the terminal device, whether the terminal device sends the SRS used for the CB in the SCDD manner. Therefore, compared with the conventional technology, a scenario in which the SRS used for the CB is sent in the SCDD manner is extended, and transmit power is increased.

Optionally, the network device may further reconfigure a target parameter, and send the reconfigured target parameter to the terminal device, so that the terminal device communicates with the network device based on the reconfigured target parameter. The target parameter includes at least one of the following: the SRS resource in the first configuration information, the quantity of ports in the first configuration information, whether the SRS used for the CB and the SRS used for AS are multiplexed in the first configuration information, or the second configuration information.

In some possible implementations, the network device may periodically reconfigure the target parameter

In some other possible implementations, the network device may reconfigure the target parameter based on another parameter For example, the another parameter includes at least one of the following: a signal strength of the terminal device or power consumption of the terminal device.

In some other possible implementations, the network device may receive an assistance message reported by the terminal device. The reported assistance message is used to request the network device to reconfigure the target parameter, so that the network device reconfigures the target parameter based on the assistance message.

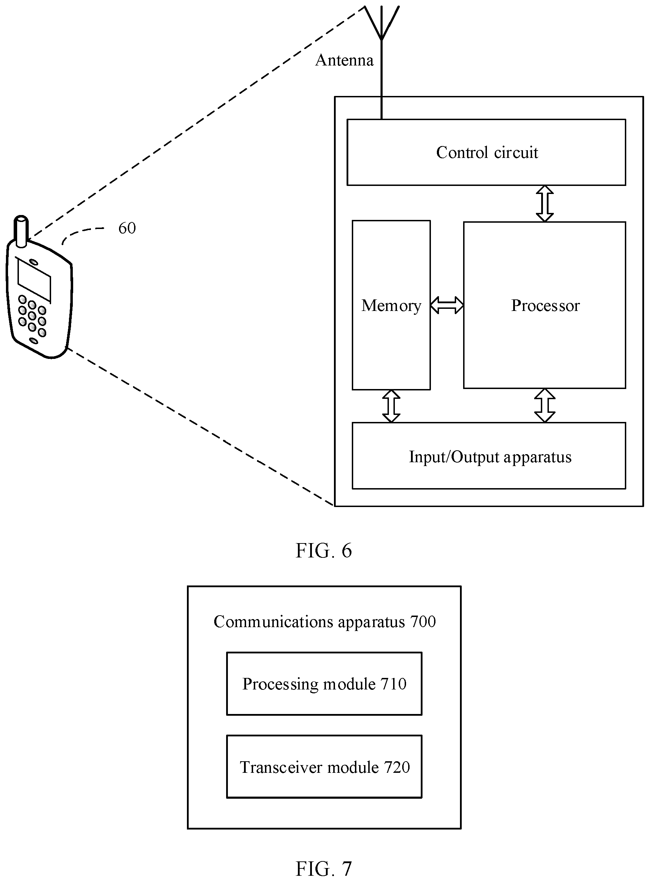

The foregoing describes in detail the SRS transmission method in embodiments of this application with reference to FIG. 1 to FIG. 4. The following describes in detail apparatuses in embodiments of this application with reference to FIG. 5 to FIG. 8. It should be understood that the apparatuses shown in FIG. 5 to FIG. 8 can implement one or more steps in the method procedure shown in FIG. 3. To avoid repetition, details are not described herein again. For example, a processing module 510 in a communication device 500 shown in FIG. 5 may perform S230 in FIG. 3, and a transceiver module 520 may perform S220 in FIG. 3. A processing module 710 in a communication apparatus 700 shown in FIG. 7 may perform S210 in FIG. 3, and a transceiver module 720 may perform S230 in FIG. 3.

FIG. 5 is a schematic diagram of a communication device according to an embodiment of this application. The communication device 500 shown in FIG. 5 includes the processing module 510 and the transceiver module 520.

The transceiver module 520 is configured to receive first configuration information and second configuration information that are sent by a network device. The first configuration information is used to indicate an SRS resource used for a CB and/or whether the SRS used for the CB and an SRS used for AS are multiplexed, and the second configuration information is used to indicate a waveform used for communication between the network device and a terminal device and a maximum quantity of transport layers. The waveform includes a discrete Fourier transform spread orthogonal frequency division multiplexing DFT-s-OFDM waveform and/or a cyclic prefix orthogonal frequency division multiplexing CP-OFDM waveform.

The processing module 510 is configured to determine, based on the first configuration information, whether a first preset condition is met. The first preset condition includes: The SRS used for the CB and the SRS used for AS are not multiplexed.

The processing module 510 is further configured to determine, based on the second configuration information, whether a second preset condition is met. The second preset condition includes: an upper limit of an actual quantity of transport layers is less than a quantity of antennas actually used by the terminal device for transmission, and the upper limit of the actual quantity of transport layers is determined based on the waveform and the maximum quantity of transport layers.

When a preset condition is met, the transceiver module 520 is further configured to send the SRS used for the CB to the network device in an SCDD manner.

Optionally, the first configuration information is further used to indicate a quantity of antenna ports for the SRS used for the CB. The processing module 510 is further configured to determine whether the upper limit of the actual quantity of transport layers is greater than or equal to 2. The transceiver module 520 is further configured to: when the upper limit of the actual quantity of transport layers is greater than or equal to 2, send the SRS used for CB to the network device in the SCDD manner on N antenna ports for the SRS used for the CB through a plurality of antennas, where N is equal to the upper limit of the actual quantity of transport layers; or when the upper limit of the actual quantity of transport layers is less than 2, send the SRS used for the CB to the network device in the SCDD manner on one antenna port for the SRS used for the CB through a plurality of antennas.

Optionally, when the waveform is the DFT-s-OFDM waveform, the upper limit of the actual quantity of transport layers is 1.

Optionally, when the waveform is the CP-OFDM waveform, the upper limit of the actual quantity of transport layers is the maximum quantity of transport layers.

Optionally, the first configuration information is carried in an SRS configuration message.

Optionally, the second configuration information is carried in a physical uplink shared channel PUSCH configuration message.

Optionally, the maximum quantity of transport layers is less than or equal to a minimum value in the quantity of antenna ports for the SRS used for the CB and a quantity of transmit antennas, and the quantity of antenna ports for the SRS used for the CB is less than the quantity of transmit antennas.

In a possible implementation, the communication apparatus 500 may be a terminal device 60. A function of the processing module 510 may be implemented by a processor in the terminal device, and a function of the transceiver module 520 may be implemented by using a control circuit and an antenna in the terminal device. The following describes a structure of a terminal device in an embodiment of this application with reference to FIG. 6.

FIG. 6 is a schematic diagram of a structure of a terminal device according to an embodiment of this application. The terminal device is applicable to the system shown in FIG. 1, and perform functions of the terminal device in the foregoing method embodiments. For ease of description, FIG. 6 shows only main components of the terminal device. As shown in FIG. 6, a terminal device 60 includes a processor, a memory, a control circuit, an antenna, and an input/output apparatus. The processor is mainly configured to process a communication protocol and communication data, control the entire terminal device, execute a software program, and process data of the software program, for example, configured to support the terminal device in performing actions described in the foregoing method embodiment. The memory is mainly configured to store the software program and data. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 6 shows only one memory and only one processor. In an actual terminal device, there may be a plurality of processors and a plurality of memories. The memory may also be referred to as a storage medium, a storage device, or the like. This is not limited in this embodiment of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor in FIG. 6. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

FIG. 7 is a schematic diagram of a communication device according to another embodiment of this application. The communication apparatus 700 shown in FIG. 7 includes the processing module 710 and the transceiver module 720.

The processing module 710 is configured to configure first configuration information and second configuration information. The first configuration information is used to indicate an SRS resource used for a CB and/or whether the SRS used for the CB and an SRS used for AS are multiplexed, and the second configuration information is used to indicate a waveform used for communication between the network device and a terminal device and a maximum quantity of transport layers. The waveform includes a discrete Fourier transform spread orthogonal frequency division multiplexing DFT-s-OFDM waveform and/or a cyclic prefix orthogonal frequency division multiplexing CP-OFDM waveform.

The transceiver module 720 is configured to send the first configuration information and the second configuration information to the terminal device. The first configuration information is used by the terminal device to determine whether a first preset condition is met. The first preset condition includes: The SRS used for the CB and the SRS used for AS are not multiplexed. The second configuration information is used by the terminal device to determine whether a second preset condition is met. The second preset condition includes: An upper limit of an actual quantity of transport layers is less than a quantity of antennas actually used by the terminal device for transmission, and the upper limit of the actual quantity of transport layers is determined based on the waveform and the maximum quantity of transport layers.

The transceiver module 720 is further configured to receive the SRS that is used for the CB and that is sent by the terminal device in a small cyclic delay diversity SCDD manner. The SRS that is used for the CB and that is sent by the terminal device in the SCDD manner is sent when the terminal device determines that the first preset condition and the second preset condition are met.

Optionally, the first configuration information is further used to indicate a quantity of antenna ports for the SRS used for CB. The transceiver module 720 is further configured to: when the upper limit of the actual quantity of transport layers is greater than or equal to 2, receive the SRS that is used for the CB and that is sent by the terminal device in the SCDD manner on N antenna ports for the SRS used for the CB through a plurality of antennas, where N is equal to the upper limit of the actual quantity of transport layers; or when the upper limit of the actual quantity of transport layers is less than 2, receive the SRS that is used for the CB and that is sent by the terminal device in the SCDD manner on one antenna port for the SRS used for the CB through a plurality of antennas.

Optionally, when the waveform is the DFT-s-OFDM waveform, the upper limit of the actual quantity of transport layers is 1.

Optionally, when the waveform is the CP-OFDM waveform, the upper limit of the actual quantity of transport layers is the maximum quantity of transport layers.

Optionally, the first configuration information is carried in an SRS configuration message.

Optionally, the second configuration information is carried in a physical uplink shared channel PUSCH configuration message.

Optionally, the maximum quantity of transport layers is less than or equal to a minimum value in the quantity of antenna ports for the SRS used for the CB and a quantity of transmit antennas, and the quantity of antenna ports for the SRS used for the CB is less than the quantity of transmit antennas.

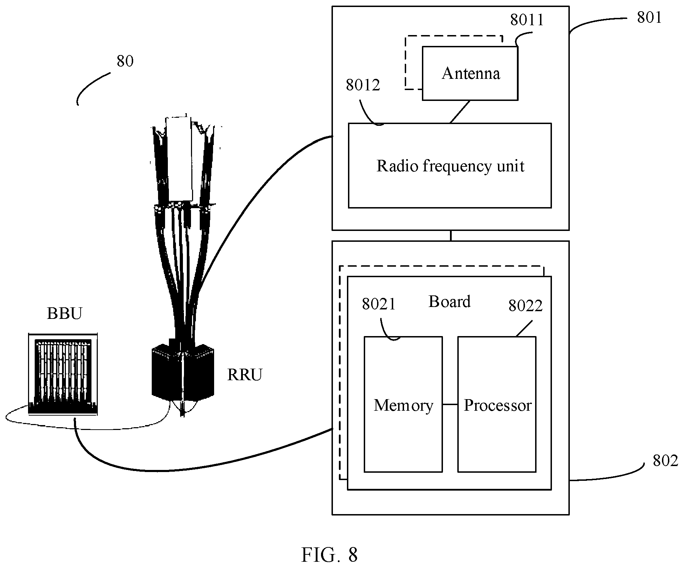

In a possible implementation, the communication apparatus 700 may be a network device, for example, a base station 80 described below. A function of the processing module 710 may be implemented by a processor 8022 in the base station, and a function of the transceiver module 720 may be implemented by using an RRU 801 in the base station 80. The following describes a structure of a network device in an embodiment of this application with reference to FIG. 8.

FIG. 8 is a schematic diagram of a structure of a network device according to an embodiment of this application, for example, may be a schematic diagram of a structure of a base station. As shown in FIG. 8, the base station may be applied to a system shown in FIG. 1, to perform a function of the network device in the foregoing method embodiments. A base station 80 may include one or more radio frequency units such as a remote radio unit (remote radio unit, RRU) 801 and one or more baseband units (baseband unit, BBU) (which may also be referred to as a digital unit (digital unit, DU)) 802. The RRU 801 may be referred to as a transceiver unit, a transceiver, a transceiver circuit, a transceiver, or the like, and the RRU 801 may include at least one antenna 8011 and a radio frequency unit 8012. The RRU 801 is mainly configured to send/receive a radio frequency signal and perform conversion between a radio frequency signal and a baseband signal, for example, configured to send a signaling message in the foregoing embodiment to a terminal device. The BBU 802 is mainly configured to perform baseband processing, control the base station, and the like. The RRU 801 and the BBU 802 may be physically disposed together, or may be physically disposed separately, in other words, the base station 80 is a distributed base station.

The BBU 802 is a control center of the base station, may also be referred to as a processing unit, and is mainly configured to implement a baseband processing function such as channel coding, multiplexing, modulation, and spreading. For example, the BBU (the processing unit) 802 may be configured to control the base station to perform operation procedures related to the network device in the foregoing method embodiment.

In an example, the BBU 802 may include one or more boards, and a plurality of boards may jointly support a radio access network (for example, an LTE network) of a single access standard, or may separately support radio access networks (such as an LTE network, a 5G network, or another network) of different access standards. The BBU 802 further includes a memory 8021 and a processor 8022, and the memory 8021 is configured to store necessary instructions and data. For example, the memory 8021 stores a correspondence between a codebook index and a precoding matrix in the foregoing embodiment. The processor 8022 is configured to control the base station to perform a necessary action. For example, the processor 8022 is configured to control the base station to perform the operation procedures related to the network device in the foregoing method embodiment. The memory 8021 and the processor 8022 may serve the one or more boards. In other words, a memory and a processor may be disposed on each board. Alternatively, a plurality of boards may share a same memory and a same processor. In addition, a necessary circuit may further be disposed on each board.

This application further provides a communication system, including the foregoing one or more network devices and one or more terminal devices.

It should be understood that, the processor in embodiments of this application may be a central processing unit (Central Processing Unit, CPU), or may be another general purpose processor, a digital signal processor (digital signal processor, DSP), an application-specific integrated circuit (application specific integrated circuit, ASIC), a field programmable gate array (field-programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

For ease of understanding, the following describes terms used in a process of describing the solutions in this application.

In embodiments of this application, the term "indication" may include a direct indication and an indirect indication, or may include an explicit indication and an implicit indication. Information indicated by specific information (for example, the indication information described above) is referred to as to-be-indicated information. In a specific implementation process, the to-be-indicated information may be indicated in a plurality of manners, for example, but not limited to, directly indicating the to-be-indicated information, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

In embodiments of this application, "first", "second", and various numeric numbers are merely used for distinguishing for ease of description and are not intended to limit the scope of embodiments of this application. For example, the numeric numbers are used for distinguishing between different indication information, different beams, and different panels.

In embodiments of this application, the "communication protocol" may be a standard protocol in the communication field, for example, may include an LTE protocol, an NR protocol, and a related protocol applied to a future communication system. This is not limited in this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In various embodiments of this application, sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, function units in embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sounding reference signal SRS transmission method, comprising:

   receiving, by a terminal device, first configuration information and second configuration information that are sent by a network device, wherein the first configuration information is used to indicate an SRS resource used for a codebook CB and/or whether the SRS used for the CB and an SRS used for antenna switching AS are multiplexed, the second configuration information is used to indicate a waveform used for communication between the network device and the terminal device and a maximum quantity of transport layers, and the waveform comprises a discrete Fourier transform spread orthogonal frequency division multiplexing DFT-s-OFDM waveform and/or a cyclic prefix orthogonal frequency division multiplexing CP-OFDM waveform;
   determining, by the terminal device based on the first configuration information, whether a first preset condition is met, wherein the first preset condition comprises: the SRS used for the CB and the SRS used for AS are not multiplexed;
   determining, by the terminal device based on the second configuration information, whether a second preset condition is met, wherein the second preset condition comprises: an upper limit of an actual quantity of transport layers is less than a quantity of antennas actually used by the terminal device for transmission, and the upper limit of the actual quantity of transport layers is determined based on the waveform and the maximum quantity of transport layers; and

when the first preset condition and the second preset condition are met, sending, by the terminal device, the SRS used for the CB to the network device in a small cyclic delay diversity SCDD manner.

2. The method according to claim 1, wherein the first configuration information is further used to indicate a quantity of antenna ports for the SRS used for the CB, and the sending, by the terminal device, an SRS used for the CB to the network device in a small cyclic delay diversity SCDD manner comprises:

determining, by the terminal device, whether the upper limit of the actual quantity of transport layers is greater than or equal to 2;

when the upper limit of the actual quantity of transport layers is greater than or equal to 2, sending, by the terminal device, the SRS used for CB to the network device in the SCDD manner on N antenna ports for the SRS used for the CB through a plurality of antennas, wherein N is equal to the upper limit of the actual quantity of transport layers; or

when the upper limit of the actual quantity of transport layers is less than 2, sending, by the terminal device, the SRS used for the CB to the network device in the SCDD manner on one antenna port for the SRS used for the CB through a plurality of antennas.

3. The method according to claim 2, wherein when the waveform is the DFT-s-OFDM waveform, the upper limit of the actual quantity of transport layers is 1.

4. The method according to claim 2, wherein when the waveform is the CP-OFDM waveform, the upper limit of the actual quantity of transport layers is the maximum quantity of transport layers.

5. The method according to any one of claims 1 to 4, wherein the first configuration information is carried in an SRS configuration message.

6. The method according to any one of claims 1 to 5, wherein the second configuration information is carried in a physical uplink shared channel PUSCH configuration message.

7. The method according to any one of claims 1 to 6, wherein the maximum quantity of transport layers is less than or equal to a minimum value in the quantity of antenna ports for the SRS used for the CB and a quantity of transmit antennas, and

the quantity of antenna ports for the SRS used for the CB is less than the quantity of transmit antennas.

8. A sounding reference signal SRS transmission method, comprising:

configuring, by a network device, first configuration information and second configuration information, wherein the first configuration information is used to indicate an SRS resource used for a codebook CB and/or whether the SRS used for the CB and an SRS used for antenna switching AS are multiplexed, the second configuration information is used to indicate a waveform used for communication between the network device and a terminal device and a maximum quantity of transport layers, and the waveform comprises a discrete Fourier transform spread orthogonal frequency division multiplexing DFT-s-OFDM waveform and/or a cyclic prefix orthogonal frequency division multiplexing CP-OFDM waveform;

sending, by the network device, the first configuration information and the second configuration information to the terminal device, wherein the first configuration information is used by the terminal device to determine whether a first preset condition is met, the first preset condition comprises: the SRS used for the CB and the SRS used for antenna switching AS are not multiplexed, the second configuration information is used by the terminal device to determine whether a second preset condition is met, the second preset condition comprises: an upper limit of an actual quantity of transport layers is less than a quantity of antennas actually used by the terminal device for transmission, and the upper limit of the actual quantity of transport layers is determined based on the waveform and the maximum quantity of transport layers; and

receiving, by the network device, the SRS that is used for the CB and that is sent by the terminal device in a small cyclic delay diversity SCDD manner, wherein the SRS that is used for the CB and that is sent by the terminal device in the SCDD manner is sent when the terminal device determines that the first preset condition and the second preset condition are met.

9. The method according to claim 8, wherein the first configuration information is further used to indicate a quantity of antenna ports for the SRS used for CB, and the receiving, by the network device, the SRS that is used for the CB and that is sent by the terminal device in a small cyclic delay diversity SCDD manner comprises:

when the upper limit of the actual quantity of transport layers is greater than or equal to 2, receiving, by the network device, the SRS that is used for the CB and that is sent by the terminal device in the SCDD manner on N antenna ports for the SRS used for the CB through a plurality of antennas, wherein N is equal to the upper limit of the actual quantity of transport layers; or

when the upper limit of the actual quantity of transport layers is less than 2, receiving, by the network device, the SRS that is used for the CB and that is sent by the terminal device in the SCDD manner on one antenna port for the SRS used for the CB through a plurality of antennas.

10. The method according to claim 9, wherein when the waveform is the DFT-s-OFDM waveform, the upper limit of the actual quantity of transport layers is 1.

11. The method according to claim 9, wherein when the waveform is the CP-OFDM waveform, the upper limit of the actual quantity of transport layers is the maximum quantity of transport layers.

12. The method according to any one of claims 8 to 11, wherein the first configuration information is carried in an SRS configuration message.

13. The method according to any one of claims 8 to 12, wherein the second configuration information is carried in a physical uplink shared channel PUSCH configuration message.

14. The method according to any one of claims 8 to 13, wherein

the maximum quantity of transport layers is less than or equal to a minimum value in the quantity of antenna ports for the SRS used for the CB and a quantity of transmit antennas, and
the quantity of antenna ports for the SRS used for the CB is less than the quantity of transmit antennas.

15. A communication apparatus, comprising:

a transceiver module, configured to receive first configuration information and second configuration information that are sent by a network device, wherein the first configuration information is used to indicate an SRS resource used for a codebook CB and/or whether the SRS used for the CB and an SRS used for antenna switching AS are multiplexed, the second configuration information is used to indicate a waveform used for communication between the network device and a terminal device and a maximum quantity of transport layers, and the waveform comprises a discrete Fourier transform spread orthogonal frequency division multiplexing DFT-s-OFDM waveform and/or a cyclic prefix orthogonal frequency division multiplexing CP-OFDM waveform; and
a processing module, configured to determine, based on the first configuration information, whether a first preset condition is met, wherein the first preset condition comprises: the SRS used for the CB and the SRS used for AS are not multiplexed, wherein
the processing module is further configured to determine, based on the second configuration information, whether a second preset condition is met, wherein the second preset condition comprises: an upper limit of an actual quantity of transport layers is less than a quantity of antennas actually used by the terminal device for transmission, and the upper limit of the actual quantity of transport layers is determined based on the waveform and the maximum quantity of transport layers; and
when the first preset condition and the second preset condition are met, the transceiver module is further configured to send the SRS used for the CB to the network device in a small cyclic delay diversity SCDD manner.

16. The communication apparatus according to claim 15, wherein the first configuration information is further used to indicate a quantity of antenna ports for the SRS used for the CB, and the processing module is further configured to determine whether the upper limit of the actual quantity of transport layers is greater than or equal to 2; and the transceiver module is further configured to:

when the upper limit of the actual quantity of transport layers is greater than or equal to 2, send the SRS used for CB to the network device in the SCDD manner on N antenna ports for the SRS used for the CB through a plurality of antennas, wherein N is equal to the upper limit of the actual quantity of transport layers; or
when the upper limit of the actual quantity of transport layers is less than 2, send the SRS used for the CB to the network device in the SCDD manner on one antenna port for the SRS used for the CB through a plurality of antennas.

17. The communication apparatus according to claim 16, wherein when the waveform is the DFT-s-OFDM waveform, the upper limit of the actual quantity of transport layers is 1.

18. The communication apparatus according to claim 16, wherein when the waveform is the CP-OFDM waveform, the upper limit of the actual quantity of transport layers is the maximum quantity of transport layers.

19. The communication apparatus according to any one of claims 15 to 18, wherein the first configuration information is carried in an SRS configuration message.

20. The communication apparatus according to any one of claims 15 to 19, wherein the second configuration information is carried in a physical uplink shared channel PUSCH configuration message.

21. The communication apparatus according to any one of claims 15 to 20, wherein the maximum quantity of transport layers is less than or equal to a minimum value in the quantity of antenna ports for the SRS used for the CB and a quantity of transmit antennas, and
the quantity of antenna ports for the SRS used for the CB is less than the quantity of transmit antennas.

22. A communication apparatus, comprising:

a processing module, configured to configure first configuration information and second configuration information, wherein the first configuration information is used to indicate an SRS resource used for a codebook CB and/or whether the SRS used for the CB and an SRS used for antenna switching AS are multiplexed, the second configuration information is used to indicate a waveform used for communication between a network device and a terminal device and a maximum quantity of transport layers, and the waveform comprises a discrete Fourier transform spread orthogonal frequency division multiplexing DFT-s-OFDM waveform and/or a cyclic prefix orthogonal frequency division multiplexing CP-OFDM waveform; and
a transceiver module, configured to send the first configuration information and the second configuration information to the terminal device, wherein the first configuration information is used by the terminal device to determine whether a first preset condition is met, the first preset condition comprises: the SRS used for the CB and the SRS used for antenna switching AS are not multiplexed, the second configuration information is used by the terminal device to determine whether a second preset condition is met, the second preset condition comprises: an upper limit of an actual quantity of transport layers is less than a quantity of antennas actually used by the terminal device for transmission, and the upper limit of the actual quantity of transport layers is determined based on the waveform and the maximum quantity of transport layers, wherein
the transceiver module is further configured to receive the SRS that is used for the CB and that is sent by the terminal device in a small cyclic delay diversity SCDD manner, wherein the SRS that is used for the CB and that is sent by the terminal device in the SCDD manner is sent when the terminal device determines that the first preset condition and the second preset condition are met.

23. The communication apparatus according to claim 22, wherein the first configuration information is further used to indicate a quantity of antenna ports for the SRS used for the CB, and the transceiver module is further configured to:

when the upper limit of the actual quantity of transport layers is greater than or equal to 2, receive the SRS that is used for the CB and that is sent by the terminal device in the SCDD manner on N antenna ports for the SRS used for the CB through a plurality of antennas, wherein N is equal to the upper limit of the actual quantity of transport layers; or
when the upper limit of the actual quantity of transport layers is less than 2, receive the SRS that is used for the CB and that is sent by the terminal device in the SCDD manner on one antenna port for the SRS used for the CB through a plurality of antennas.

24. The communication apparatus according to claim 23, wherein when the waveform is the DFT-s-OFDM waveform, the upper limit of the actual quantity of transport layers is 1.

25. The communication apparatus according to claim 23, wherein when the waveform is the CP-OFDM waveform, the upper limit of the actual quantity of transport layers is the maximum quantity of transport layers.

26. The communication apparatus according to any one of claims 22 to 25, wherein the first configuration information is carried in an SRS configuration message.

27. The communication apparatus according to any one of claims 22 to 26, wherein the second configuration information is carried in a physical uplink shared channel PUSCH configuration message.

28. The communication apparatus according to any one of claims 22 to 27, wherein

the maximum quantity of transport layers is less than or equal to a minimum value in the quantity of antenna ports for the SRS used for the CB and a quantity of transmit antennas, and
the quantity of antenna ports for the SRS used for the CB is less than the quantity of transmit antennas.

29. A computer-readable storage medium, wherein the computer-readable storage medium stores computer instructions, and the computer instructions enable a communication device to perform the method according to any one of claims 1 to 7 or the method according to any one of claims 8 to 14.

30. A communication apparatus, wherein the apparatus comprises a processor and a storage medium, the storage medium stores instructions, and when the instructions are run by the processor, the processor is enabled to perform the method according to any one of claims 1 to 7 or the method according to any one of claims 8 to 14.

FIG. 1

FIG. 2

Network device

Terminal device

S210: Configure first configuration information and second configuration information, where the first configuration information is used to indicate an SRS resource used for a CB and/or whether the SRS used for the CB and an SRS used for antenna switching AS are multiplexed, the second configuration information is used to indicate a waveform used for communication between the network device and a terminal device and a maximum quantity of transport layers, and the waveform includes a DFT-s-OFDM waveform and/or a CP-OFDM waveform

S220: Send the first configuration information and the second configuration information

S230: Communicate based on the first configuration information and the second configuration information

FIG. 3

Whether a condition that an
SRS used for a CB is sent in
an SCDD manner is met — S231

Y

An upper limit of an
actual quantity of
transport layers is greater
than or equal to 2 — S233

N
S232

Send the SRS used for
the CB in a non-SCDD
manner

Y  S234

Send the SRS used for the CB
to a network device in the
SCDD manner on one port
(port) for the SRS used for the
CB through a plurality of
antennas

N  S235

Send the SRS used for the CB
in the SCDD manner on N
ports (ports) for the SRS used
for the CB through the
plurality of antennas

FIG. 4

Communication apparatus 500

Processing module 510

Transceiver module 520

FIG. 5

Antenna

60

Control circuit

Memory ⇔ Processor

Input/Output apparatus

FIG. 6

Communications apparatus 700

Processing module 710

Transceiver module 720

FIG. 7

FIG. 8

## INTERNATIONAL SEARCH REPORT

| International application No. |
|---|
| **PCT/CN2021/082659** |

**A. CLASSIFICATION OF SUBJECT MATTER**

H04B 7/0456(2017.01)i

According to International Patent Classification (IPC) or to both national classification and IPC

**B. FIELDS SEARCHED**

Minimum documentation searched (classification system followed by classification symbols)

H04B; H04W; H04Q; H04L

Documentation searched other than minimum documentation to the extent that such documents are included in the fields searched

Electronic data base consulted during the international search (name of data base and, where practicable, search terms used)

CNKI; CNPAT; WPI; EPODOC; 3GPP: 探测参考信号, SRS, 小循环延时分集, SCDD, 配置信息, configuration, 码本, CB, 传输, transmi+, 层数, 波形, waveform, DFT-s-OFDM, CP-OFDM, 天线切换, AS, 预设条件, 天线数

**C. DOCUMENTS CONSIDERED TO BE RELEVANT**

| Category* | Citation of document, with indication, where appropriate, of the relevant passages | Relevant to claim No. |
|---|---|---|
| A | CN 108206714 A (ZTE CORPORATION) 26 June 2018 (2018-06-26)<br>description paragraph [0226] | 1-30 |
| A | CN 105684323 A (LG ELECTRONICS INC.) 15 June 2016 (2016-06-15)<br>entire document | 1-30 |
| A | CN 109565312 A (QUALCOMM INC.) 02 April 2019 (2019-04-02)<br>entire document | 1-30 |
| A | CN 109891790 A (LG ELECTRONICS INC.) 14 June 2019 (2019-06-14)<br>entire document | 1-30 |
| A | CN 110326243 A (LG ELECTRONICS INC.) 11 October 2019 (2019-10-11)<br>entire document | 1-30 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 June 2021** | **24 June 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/082659**

| Patent document cited in search report | | | Publication date (day/month/year) | Patent family member(s) | | | Publication date (day/month/year) |
|---|---|---|---|---|---|---|---|
| CN | 108206714 | A | 26 June 2018 | WO | 2019128885 | A1 | 04 July 2019 |
| CN | 105684323 | A | 15 June 2016 | EP | 3068060 | A1 | 14 September 2016 |
| | | | | US | 2016261325 | A1 | 08 September 2016 |
| | | | | WO | 2015065152 | A1 | 07 May 2015 |
| | | | | WO | 2015065154 | A1 | 07 May 2015 |
| | | | | KR | 20160082235 | A | 08 July 2016 |
| | | | | JP | 2016539541 | A | 15 December 2016 |
| | | | | WO | 2015065155 | A1 | 07 May 2015 |
| | | | | WO | 2015065156 | A1 | 07 May 2015 |
| | | | | WO | 2015065157 | A1 | 07 May 2015 |
| | | | | US | 2016241323 | A1 | 18 August 2016 |
| | | | | WO | 2015065158 | A1 | 07 May 2015 |
| CN | 109565312 | A | 02 April 2019 | EP | 3497810 | A1 | 19 June 2019 |
| | | | | WO | 2018031124 | A1 | 15 February 2018 |
| | | | | US | 2018048365 | A1 | 15 February 2018 |
| CN | 109891790 | A | 14 June 2019 | JP | 2020504519 | A | 06 February 2020 |
| | | | | EP | 3471305 | A1 | 17 April 2019 |
| | | | | US | 2021014879 | A1 | 14 January 2021 |
| | | | | KR | 20180127249 | A | 28 November 2018 |
| | | | | US | 2020146032 | A1 | 07 May 2020 |
| | | | | WO | 2018212628 | A1 | 22 November 2018 |
| CN | 110326243 | A | 11 October 2019 | US | 2021084640 | A1 | 18 March 2021 |
| | | | | WO | 2018128376 | A1 | 12 July 2018 |
| | | | | KR | 20190088560 | A | 26 July 2019 |
| | | | | EP | 3567783 | A1 | 13 November 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010610142